# FASCICULE DE BREVET EUROPEEN

(11) **EP 2 457 426 B1**
(45) Date de publication et mention de la délivrance du brevet: **10.07.2013**
(21) Numéro de dépôt: 11189972.0
(22) Date de dépôt: 21.11.2011
(51) Int. Cl.: A01B 49/06

(54) **Semoir avec des éléments d'appui décalés**
Sämaschine mit versetzten Stützelementen
Seeder with shifted support elements

(30) Priorité: 24.11.2010 FR 1059659
(43) Date de publication de la demande: 30.05.2012
(73) Titulaire: KUHN S.A., 67700 Saverne (FR)
(72) Inventeur: Seemann, Michel, 57370 Phalsbourg (FR)
(74) Mandataire: Esch, Esther Evelyne

(56) Documents cités:
- DE-A1- 10 307 396
- DE-U1-202007 015 637
- US-A1- 2008 190 628
- US-B1- 6 688 243

## Description

La présente invention se rapporte au domaine technique général du machinisme agricole. L'invention concerne un semoir comportant un châssis portant des organes de travail, des organes de semis et des éléments d'appui disposés transversalement à la direction d'avance, lesdits éléments d'appui s'étendant sur toute la largeur de travail et étant juxtaposés et décalés les uns par rapport aux autres compte tenu de la direction d'avance, lesdits éléments d'appui regroupant des éléments d'appui avant et des éléments d'appui arrière lesquels roulent sur le sol en pivotant autour d'un axe respectif, lesdits éléments d'appui étant susceptibles de passer d'une position de travail à une position de transport ou à une position de demi-tour, et inversement au moyen d'au moins un actionneur.

Un tel semoir est présenté dans le manuel **Rapid** série **RD 300-400C/S** de VÄDERSTAD daté du 13.11.2009. Ce semoir présente un châssis sur lequel sont répartis sur toute la largeur de travail des organes de travail tels que des disques, des organes de semis et des éléments d'appui qui roulent sur le sol en pivotant autour d'un axe respectif au travail comme au transport. Ces éléments d'appui sont des roues qui s'étendent à l'arrière du semoir, derrière les organes de semis. Chaque roue ferme et rappuie deux sillons de semis. Les graines sont déposées dans un sol meuble non rappuyé ce qui a pour effet que la profondeur d'implantation est irrégulière. Afin de mieux répartir le poids du semoir, les roues sont décalées les unes par rapport aux autres dans la direction d'avance. Ces roues sont reliées au châssis et sont placées dans plusieurs positions grâce à un actionneur. Cet actionneur permet notamment le réglage de la profondeur de travail, le relevage dans une position basse pour le demi-tour et le relevage vers une hauteur maximum pour le transport.

Chaque roue est liée au châssis au moyen d'une fourche respective, laquelle est liée au châssis via une articulation transversale d'axe sensiblement horizontal et perpendiculaire à la direction d'avance. L'axe des roues arrière est donc plus éloigné de l'articulation transversale que celui des roues avant. La répercussion sur les roues avant sera différente de celle sur les roues arrière, lors d'un changement de position de l'actionneur. Par ailleurs, comme la trémie du semoir s'étend au-dessus des organes de semis, la profondeur de travail est adaptée au cours du semis puisque la quantité de graines dans la trémie diminue. Avec les différences de pression de rappui, dues aussi à l'usure prématurée de certaines roues, toutes les graines ne seront pas déposées à la même profondeur. Un semis plus profond allongera la durée de germination et de levée des graines, augmentant aussi le risque de perte de semences par rapport à la rangée voisine.

Pour les demi-tours, les organes de travail et de semis sont relevés grâce à l'actionneur qui fait pivoter les roues dans une position basse. Toutes les roues pivotent autour de l'articulation transversale et l'effet produit sur les roues arrière est plus important que celui sur les roues avant. La pression de rappui des roues arrière sur le sol est plus élevée que celle des roues avant. Cette différence de pression de rappui dans les tournières entraîne une levée de graines hétérogène.

Au transport, l'actionneur s'étend au maximum pour écarter les organes de travail et de semis du sol par le pivotement des roues vers l'avant et vers le bas. Avec ce pivotement important, les roues avant s'éloignent du sol et seules les roues arrière restent au sol. Lors du transport, le châssis repose ainsi au sol par l'intermédiaire de toutes les roues arrière. Par ailleurs dans les virages, les roues situées proche du centre de la courbe ont tendance à ripper sur le sol plutôt qu'à rouler. De ce fait l'usure des roues extérieures sera plus importante. Avec des roues s'étendant sur toute la largeur du semoir, la stabilité du semoir est réduite notamment sur des chemins de terre où le semoir doit circuler dans les traces plus profondes laissées par les roues du tracteur.

La présente invention a pour but de remédier aux inconvénients précités. Elle doit notamment proposer un semoir pour lequel la pression de rappui est régulière sur toute la largeur de travail durant le travail et les manoeuvres et pour lequel la stabilité au transport est améliorée.

A cet effet, une importante caractéristique de l'invention consiste en ce que lesdits axes de deux éléments d'appui voisins et décalés sont reliés par un dispositif de liaison et que le plan passant par lesdits deux axes s'étend sensiblement parallèlement au sol dans la position de travail et dans la position de demi-tour et que ledit plan présente une inclinaison par rapport au sol lors du transport. Grâce à ce dispositif de liaison, les éléments d'appui sont déplacés parallèlement au sol au travail, les graines seront implantées avec précision à une profondeur donnée pour une levée rapide et homogène sur toute la largeur de travail du semoir. Par ailleurs, le déplacement vers le bas des éléments d'appui se fait aussi parallèlement à la surface du sol permettant de maintenir une pression de rappui constante sur le sol lors des manoeuvres de demi-tour. Ladite pression exercée au sol étant identique quelle que soit la position de l'élément d'appui en avant ou en arrière.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue latérale d'un semoir selon la présente invention dans une configuration de travail attelé à un tracteur,
- la **figure 2** est une vue de dessus du semoir de la figure **1**,
- la **figure 3** représente une vue latérale d'une partie du semoir de la figure **1** dans la position demi-tour,
- la **figure 4** représente une vue latérale d'une partie du semoir de la figure **1** dans la position de transport.

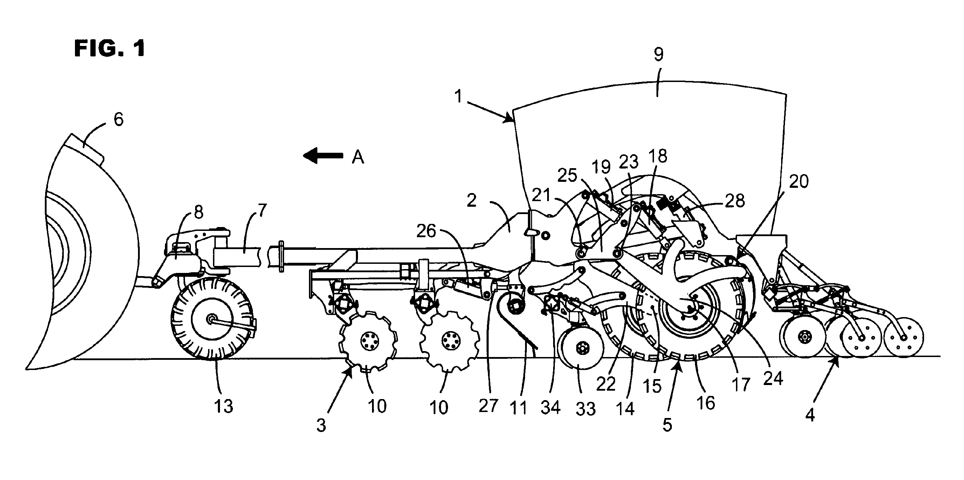

La machine agricole selon l'invention est un semoir (1) en lignes. Il permet de réaliser les semis pour une très large gamme de taille de graines et pour des densités de semis très différentes. Les conditions d'utilisation d'un tel semoir sont très diverses quant à la nature et à la consistance du sol. Le semoir peut aussi travailler dans des conditions avec une présence importante de débris végétaux. Ce semoir (1) réalise en un seul passage l'ensemble des travaux pour l'implantation d'une culture c'est-à-dire la préparation, le rappui et le semis. La figure 1 représente un semoir dans la configuration de travail. Le semoir (1) comporte un châssis (2) portant des organes de travail (3), des organes de semis (4) et des éléments d'appui (5) sur le sol. Un tracteur (6) est amené à déplacer et à animer ce semoir (1) suivant une direction d'avance indiquée par la flèche (A). Dans la suite de la description, les notions suivantes "avant", "arrière" et "devant", "derrière" sont définies par rapport au sens d'avance (A). Le semoir (1) est attelé au tracteur (6) par l'intermédiaire d'un timon (7) relié au châssis (2). Le timon (7) présente une tête d'attelage pivotante (8) destinée à être reliée aux bras inférieurs du tracteur (6). L'angle de braquage du semoir (1) est important, de l'ordre de 90°, grâce à l'axe sensiblement vertical.

Le semoir (1) repose sur le sol au moyen d'éléments d'appui (5) lors du travail, des demi-tours et lors du transport. Le châssis (2) porte une trémie (9) qui s'étend sensiblement à la verticale des éléments d'appui (5). La trémie (9) permet le stockage de graines qui sont dosées puis acheminées vers les organes de semis (4). D'après les figures, les éléments d'appui (5) s'étendent entre les organes de travail (3) et les organes de semis (4). Ces éléments d'appui (5) et les organes (3, 4) sont disposés transversalement à la direction d'avance (A). Les organes de travail (3) se composent d'outils de préparation du sol qui permettent d'ameublir, d'émotter et de niveler le lit de semis avant d'implanter la semence. Dans l'exemple de réalisation, les organes de travail (3) sont des disques (10) et des lames niveleuses (11) qui assurent une préparation et un nivellement du sol. Les disques (10) sont montés par paire sur deux traverses perpendiculaires à la direction d'avance (A). Ces paires sont montées sur des éléments en caoutchouc pour s'adapter aux ondulations du terrain et s'effacer en présence de pierres. Les disques (10) sont concaves et crénelés pour une meilleure pénétration dans un sol dur. La zone entre les roues du tracteur (6) est nivelée au moyen de roues (13). Ces roues (13) sont montées sous la tête d'attelage (8).

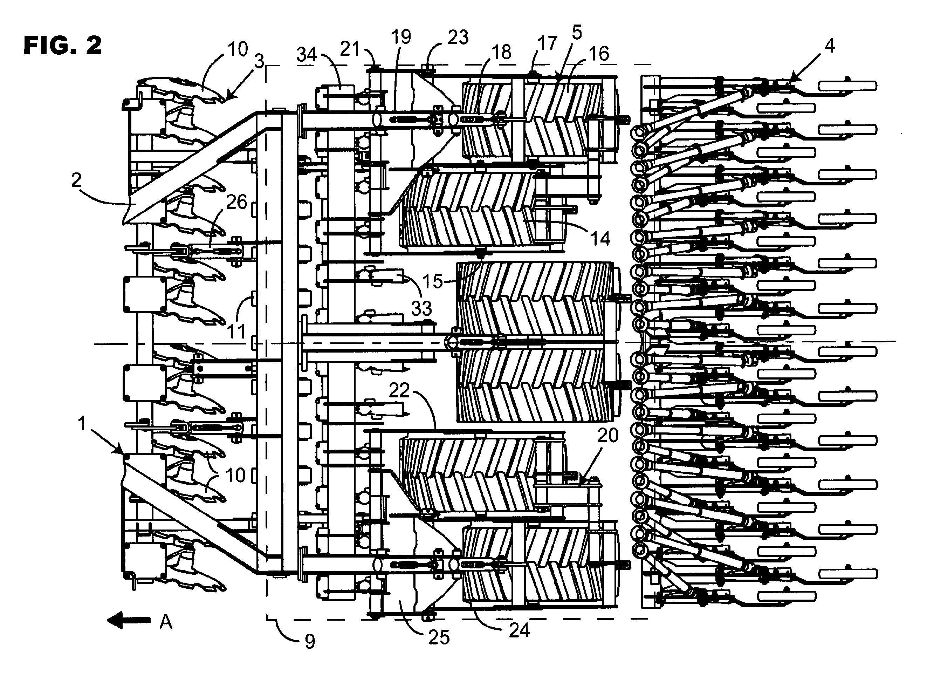

Les éléments d'appui (5) roulent sur le sol en pivotant autour d'un axe respectif. Chaque axe est sensiblement horizontal et perpendiculaire à la direction d'avance (A). Au travail et en manoeuvre de demi-tours, tous les éléments d'appui (5) restent en appui sur le sol. Pour le transport, seulement une partie des éléments d'appui (5) est utilisée. Ainsi, les éléments d'appui (5) combinent les fonctions de rappuyage, de guidage des organes de travail et de semis, et de transport. Pour une meilleure répartition du poids du semoir (1) sur le sol, au moins une partie des éléments d'appui (5) est décalée par rapport aux autres dans la direction d'avance (A). La figure 2 montre une disposition des éléments d'appui (5) selon un exemple de réalisation, la trémie (9) étant représentée en traits discontinus. Le semoir (1) présente six éléments d'appui (5) dont chacun couvre quatre organes de semis (4). Les éléments d'appui (5) sont donc avantageusement des roues larges. Les éléments d'appui (5) regroupent au moins un élément d'appui avant (14) tournant autour d'un axe avant (15) et au moins un élément arrière (16) tournant autour d'un axe arrière (17). L'élément d'appui avant (14) s'étendant devant l'élément d'appui arrière (16) par rapport à la direction d'avance (A). Les éléments d'appui (5) s'étendent sur toute la largeur de travail et sont juxtaposés et décalés les uns par rapport aux autres compte tenu de la direction d'avance (A). Les axes (15, 17) sont sensiblement horizontaux et perpendiculaires à la direction d'avance (A). Ces axes (15, 17) sont avantageusement parallèles. Pour une meilleure stabilité du semoir durant le transport, les éléments d'appui extérieurs, qui restent au sol durant les déplacements sur routes, sont des éléments d'appui arrière (16). Les éléments d'appui intermédiaires sont alors avantageusement des éléments d'appui avant (14) et les éléments d'appui intérieurs, disposés au voisinage du plan médian du semoir (1), ne sont pas décalés, ceci est une conséquence du nombre pair d'éléments d'appui (5). Ces éléments d'appui intérieurs sont également des éléments d'appui arrière (16). Avec un tel décalage entre les éléments d'appui (5), le flux de terre et les résidus s'évacuent plus facilement, il y a un effet autonettoyant. Le semoir (1) est plus portant et la force de traction, comme la consommation de fuel, est diminuée. Les éléments d'appui (5) sont susceptibles de passer d'une position de travail à une position de transport ou de demi-tour, et inversement, au moyen d'au moins un actionneur (18, 19).

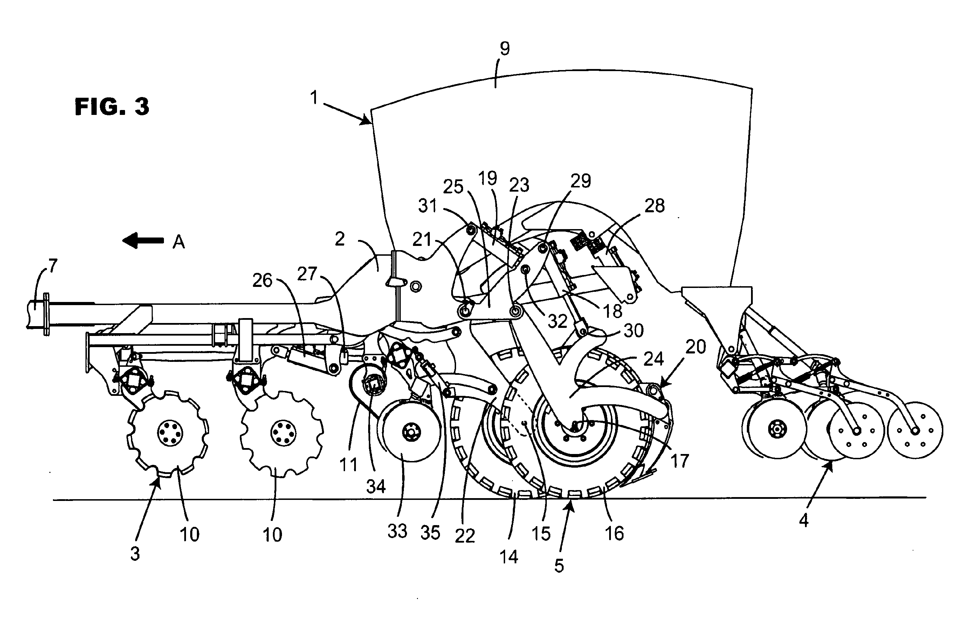

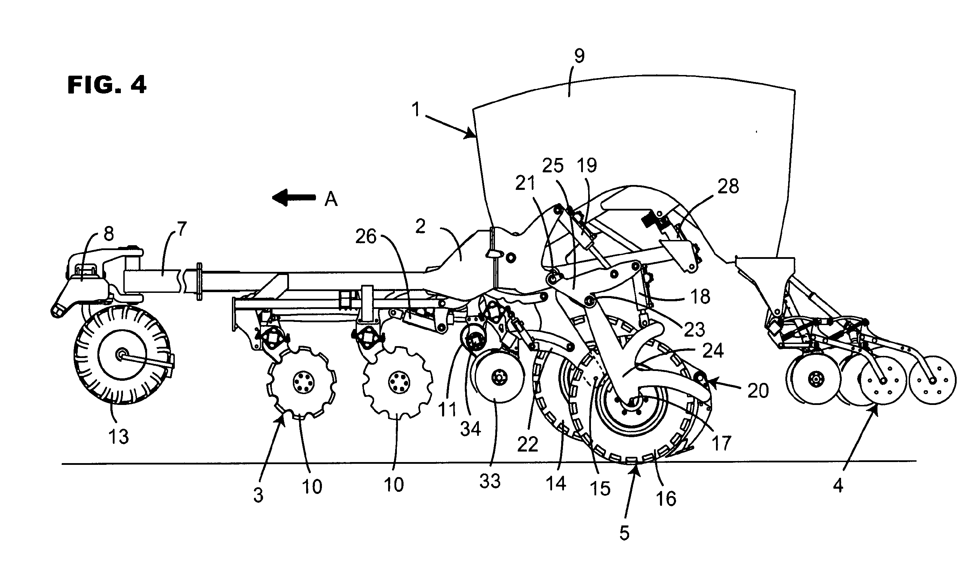

Selon une importante caractéristique de l'invention, lesdits axes (15, 17) de deux éléments d'appui (5) voisins et décalés sont reliés par un dispositif de liaison (20) et que le plan passant par lesdits deux axes (15, 17) s'étend sensiblement parallèlement au sol dans la position de travail et dans la position de demi-tour et que ledit plan est incliné par rapport au sol lors du transport. Grâce à cette caractéristique, la pression de rappui d'un élément d'appui avant (14) ou d'un élément d'appui arrière (16) est identique durant le travail et lors des demi-tours. Le rappui du sol est régulier sur toute la largeur du semoir (1) puisque le poids du semoir (1) est uniformément réparti sur l'ensemble des éléments d'appui (5). Ainsi, la profondeur de travail des organes de semis (4) est précise et constante sur toute la largeur de travail. Lors des manoeuvres de demi-tour, la pression de rappui est maintenue constante sur le sol car tous les éléments d'appui (5) se déplacent vers le bas, parallèlement à la surface du sol via un premier actionneur (18) qui dégage les organes de travail (3) et les organes de semis (4) du sol. Le semoir (1) est représenté dans la position demi-tour sur la figure 3. Pour circuler sur les routes, le semoir (1) est placé dans une position de transport, illustrée à la figure 4. Les éléments d'appui avant (14), les organes de travail (3) et les organes de semis (4) sont éloignés du sol via un deuxième actionneur (19).

D'une manière avantageuse le dispositif de liaison (20), reliant les deux axes (15, 17), est lié au châssis (2) via une première articulation (21) d'axe sensiblement horizontal et perpendiculaire à la direction d'avance (A).

Dans l'exemple de réalisation des figures, les éléments d'appui (5) sont liés au châssis (2) par l'intermédiaire d'une fourche respective. Ainsi, chaque élément d'appui avant (14) comporte une fourche avant (22) qui est articulée sur le châssis (2) au moyen de la première articulation (21). Chaque élément arrière (16) est lié au châssis (2) au moyen d'une fourche (24) respective via une deuxième articulation (23) d'axe sensiblement horizontal et perpendiculaire à la direction d'avance (A). L'axe de la deuxième articulation (23) est avantageusement parallèle à l'axe de la première articulation (21). Les axes des articulations (21, 23) sont parallèles aux axes (15, 17). Le dispositif de liaison (20) avec les axes (15, 17) forme avec les axes des articulations (21, 23) un quadrilatère déformable tel qu'un parallélogramme ; les axes respectifs (15, 17) réalisant la base du parallélogramme. Les fourches (22, 24) articulées de deux éléments d'appui (5) voisins et décalés s'étendent de manière à former un parallélogramme déformable. Les fourches avant et arrière (22, 24) sont parallèles entre elles. Les extrémités inférieures des fourches (22, 24) sont reliées par le dispositif de liaison (20) et les extrémités supérieures sont reliées par une bielle supérieure (25). Le dispositif de liaison (20) est composé de biellettes articulées qui s'étendent vers l'arrière et au-dessus des éléments d'appui (5) voisins. Les biellettes relient l'axe arrière (17) à l'axe avant (15). La bielle supérieure (25) permet de lier la deuxième articulation (23) à la première articulation (21). Les première et deuxième articulations (21, 23) sont disposées au-dessus et devant les axes avant et arrière (15, 17) compte tenu de la direction d'avance (A). Ainsi, le parallélogramme est dirigé vers l'arrière par rapport à la première articulation (21).

Grâce à ce montage sur parallélogramme, les déplacements des éléments d'appui (5) par rapport au châssis (2) se font toujours de manière parallèle au sol. Le plan passant par l'axe avant (15) et l'axe arrière (17) de deux éléments d'appui voisins et décalés est maintenu parallèle au sol lors du travail (figure 1) et durant les demi-tours (figure 3). Les axes (15, 17) s'étendent toujours à la même hauteur par rapport au sol. Le premier actionneur (18) permet de modifier l'orientation des fourches (22, 24) des éléments d'appui (5) par rapport à la verticale. Il est articulé entre la bielle supérieure (25) et les fourches arrière (24). Le premier actionneur (18) agit sur l'angle entre la bielle supérieure (25) et les fourches (22, 24). Le premier actionneur (18) est lié à la bielle supérieure (25) via une troisième articulation (29) d'axe sensiblement horizontal et perpendiculaire à la direction d'avance (A). Cette troisième articulation (29) s'étend au-dessus et en arrière de la deuxième articulation (23). Le premier actionneur (18) est lié à la fourche arrière (24) via une quatrième articulation (30) d'axe sensiblement horizontal et perpendiculaire à la direction d'avance (A). Cette quatrième articulation (30) s'étend au-dessus et en arrière de l'axe arrière (17). La quatrième articulation (30) est disposée au voisinage de la périphérie de l'élément d'appui arrière (16).

A la lumière des figures 1 et 2, les éléments d'appui (5) s'étendent entre les organes de travail (3) et les organes de semis (4). Leur profondeur de travail est déterminée par rapport aux éléments d'appui (5) et le réglage dépend de la nature et de la consistance du sol. Pour assurer un lit de semence de qualité, la profondeur des organes de travail (3) est adaptée au moyen d'un troisième actionneur (26) disposé entre le châssis (2) et les traverses de disques (10). Ainsi, les disques (10) peuvent réaliser un travail plus ou moins superficiel. L'action des lames niveleuses (11) sur le sol est réglée par un quatrième actionneur (27). Le semis sur une surface qui est rappuyée permet un contrôle plus précis de la profondeur. La profondeur d'implantation des graines dans le sol est également réglable pour s'adapter aux diverses espèces et conditions. Un cinquième actionneur (28) s'étendant entre le châssis (2) et les organes de semis (4) permet de régler la profondeur de semis. Les organes de semis (4) sont par exemple des socs à disques. Les différents actionneurs (18, 19, 26, 27, 28) sont avantageusement des vérins du type vérin à double effet.

Pour passer dans la position demi-tour depuis la position de travail, l'utilisateur actionne le premier actionneur (18) ce qui provoque la sortie du piston et fait pivoter les fourches (22, 24) et les éléments d'appui (5) vers le sol. Les éléments d'appui (5) se rapprochent sensiblement de la tête d'attelage (8). Pour retourner à la position de travail, la commande du premier actionneur (18) est inversée. Le plan passant par les axes (15, 17) est maintenu sensiblement parallèle au sol. D'après la figure 2, un premier actionneur (18) s'étend de chaque côté du semoir (1), chacun agit sur un parallélogramme regroupant un élément d'appui avant (14) et un élément d'appui arrière (16). Les éléments d'appui intérieurs suivent le mouvement des éléments d'appui décalés grâce à un actionneur correspondant pour le passage de la position de travail à la position demi-tour. La commande des premiers actionneurs (18) permet de dégager suffisamment les organes (3, 4) du sol pour effectuer les manoeuvres de fin de champ. Le passage de la position travail à la position demi-tour, et inversement se fait grâce à un minimum d'huile puisque seuls les premiers actionneurs (18) ont besoin d'être alimentés. Ce changement de position se fait donc rapidement.

La figure 3 montre la position de demi-tour dans laquelle les organes de travail (3) et les organes de semis (4) sont dégagés du sol. Tous les éléments d'appui (5) restent au sol pour ne pas modifier la pression de rappui par rapport à la position de travail et éviter un tassement excessif. Dans cette position, les fourches (22, 24), de deux éléments d'appui (5) voisins et décalés formant un parallélogramme, ont été redressées par pivotement autour de leur articulation respective (21, 23). Les fourches (22, 24) s'étendent plus proche de la verticale. Grâce au parallélogramme, les éléments avant et arrière (14, 16) se déplacent vers l'avant et vers le bas, parallèlement au sol ce qui permet de maintenir une pression de rappui homogène lors des demi-tours. Comme les éléments d'appui (5) descendent, les organes de travail (3) et les organes de semis (4) s'éloignent du sol de manière sensiblement parallèle. Les éléments d'appui (5) se déplacent parallèlement au sol. La direction de la bielle supérieure (25), donnée par les première et deuxième articulations (21, 23), reste sensiblement parallèle au sol.

Pour circuler sur les routes, le semoir (1) est placé dans une position de transport, illustrée à la figure 4. Dans cette position, on remarque que les éléments d'appui avant (14) sont dégagés du sol. Seuls les éléments d'appui arrière (16) disposés à l'extérieur, restent au sol durant les déplacements sur routes. Pour garantir une bonne tenue dans les chemins, les éléments d'appui intérieurs ne restent pas appuyés au sol, ils sont maintenus dans la position de travail. Pour passer du travail au transport, et inversement, l'utilisateur actionne le deuxième actionneur (19), lequel est articulé entre le châssis (2) et la bielle supérieure (25). Le deuxième actionneur (19) est lié au châssis (2) via une cinquième articulation (31) d'axe sensiblement horizontal et perpendiculaire à la direction d'avance (A). Cette cinquième articulation (31) s'étend au-dessus de la première articulation (21). Le deuxième actionneur (19) est lié à la bielle supérieure (25) via une sixième articulation (32) d'axe sensiblement horizontal et perpendiculaire à la direction d'avance (A). Cette sixième articulation (32) s'étend au-dessus et en arrière de la deuxième articulation (23). La sixième articulation (32) est disposée sensiblement entre la troisième articulation (29) et la deuxième articulation (23). Le deuxième actionneur (19) agit donc sur la première articulation (21) pour modifier l'orientation de la bielle supérieure (25) et par conséquent l'orientation de la base du parallélogramme par rapport au sol. La bielle supérieure (25) pivote, vers le sol, autour de la première articulation (21) pour arriver dans la position de transport. En pivotant ainsi, la deuxième articulation (23), tout comme l'axe arrière (17), sont poussés vers le sol et le parallélogramme est déformé. L'axe arrière (17) s'étend en dessous de l'axe avant (15) et la deuxième articulation (23) s'étend en dessous de la première articulation (21). Le plan passant par les axes (15, 17) n'est plus parallèle à la surface du sol, mais il est incliné par rapport au sol. L'inclinaison du plan est telle qu'il coupe le sol derrière les éléments d'appui (5). Ce pivotement autour de la première articulation (21) permet de relever les organes de travail (3) et les organes de semis (4) de manière importante pour avoir une garde au sol suffisante pour le transport. Comme les éléments d'appui arrière (16) sont rapprochés de la tête d'attelage (8), les entrées et sorties de champ seront facilitées. Dans l'exemple de la figure 2, un deuxième actionneur (19) s'étend de chaque côté du semoir (1), chacun agit sur la bielle supérieure (25) respective d'un des parallélogrammes.

Les éléments d'appui (5) pivotent autour de ladite première articulation (21) au moyen d'au moins un deuxième actionneur (19) pour passer d'une position de travail à une position de transport, et inversement. Les éléments d'appui (5) pivotent autour de ladite deuxième articulation (23) au moyen d'au moins un premier actionneur (18) pour passer d'une position de travail à une position de demi-tour, et inversement. Le déplacement des éléments d'appui (5) vers le bas est suffisant pour dégager tous les organes de travail et de semis (3, 4) du sol pour les manoeuvres de demi-tour. Seuls les éléments d'appui extérieurs qui sont des éléments d'appui arrière (16) sont toujours en contact avec le sol. Le passage en position de transport est également rapide puisqu'il suffit de commander le (les) deuxième(s) actionneur(s) (19).

D'une manière préférentielle, le semoir (1) réalise également la distribution de produit, par exemple l'engrais de démarrage, pour favoriser la germination et le développement du jeune plant. Ce semoir (1) réalise donc la préparation du lit de semence, l'apport d'engrais et le semis simultanément en un seul passage. Le semoir (1) présente des enfouisseurs (33) qui déposent l'engrais dans la terre. Un enfouisseur (33) est placé à l'avant de chaque organe de semis (4) et de manière légèrement décalée par rapport au rang de semis. Les enfouisseurs (33) sont répartis sur une traverse (34) perpendiculaire à la direction d'avance (A). Cette traverse (34) est montée sur les fourches avant (22) des éléments avant (14). Le montage de la traverse (34) se fait au moyen d'un parallélogramme déformable qui lui permet de se déplacer parallèlement au sol. Le réglage de la profondeur d'implantation de l'engrais dans le sol est géré par l'intermédiaire d'un sixième actionneur (35). Comme la traverse (34) est montée sur les fourches avant (22), les enfouisseurs (33) sont relevés automatiquement lors de la mise en position de transport.

Dans une alternative non représentée, le parallélogramme est dirigé vers l'avant par rapport à la première articulation (21). Les première et deuxième articulations (21, 23) sont disposées au-dessus et derrière les axes avant et arrière (15, 17) compte tenu de la direction d'avance (A). Dans ce cas, ce sont les éléments avant (14) qui restent au sol pour le transport. L'inclinaison du plan passant par les axes (15, 17) est telle qu'il coupe le sol devant les éléments d'appui (5) au transport.

Selon un autre exemple de réalisation non représenté, le dispositif de liaison desdits axes est un balancier. Grâce au balancier reliant deux éléments d'appui voisins et décalés, la pression de rappui est répartie de manière identique. Le balancier regroupe un élément d'appui arrière et un élément d'appui avant qui sont voisins. Pour une répartition identique de la pression de rappui sur le sol, le balancier présente une articulation inférieure s'étendant au centre du balancier. Le balancier est lié au châssis au moyen d'un bras articulé. Le bras est lié au balancier via l'articulation inférieure et est lié au châssis via une articulation supérieure. Ces deux articulations présentent chacune un axe sensiblement horizontal et perpendiculaire à la direction d'avance. Le passage de la position de travail à la position de demi-tour est réalisé par l'intermédiaire d'un premier actionneur disposé entre le châssis et le bras. Il permet de faire pivoter le bras par rapport à l'articulation supérieure. Les axes des éléments d'appui voisins sont maintenus dans un plan parallèle au sol grâce à un deuxième actionneur. Ce dernier s'étend entre le balancier et le bras. Le deuxième actionneur permet de passer de la position de travail à la position de transport. En agissant sur ce deuxième actionneur, les éléments d'appui arrière sont pivotés vers le bas par rapport à l'articulation inférieure ce qui entraîne le soulèvement des éléments d'appui avant. Ainsi, le plan passant par les axes des éléments d'appui est incliné par rapport au sol.

Le semoir de l'invention peut également être configuré pour que chaque élément d'appui (5) couvre au moins un organe de semis (4). Un élément d'appui (5) peut ainsi couvrir deux, trois ou plus d'organes de semis (4).

Il est bien évident que l'invention n'est pas limitée aux modes de réalisation décrits ci-dessus et représentés sur les dessins annexés.

## Revendications

1. Semoir (1) comportant un châssis (2) portant des organes de travail (3), des organes de semis (4) et des éléments d'appui (5) disposés transversalement à la direction d'avance (A), lesdits éléments d'appui (5) s'étendant sur toute la largeur de travail et étant juxtaposés et décalés les uns par rapport aux autres compte tenu de la direction d'avance (A), lesdits éléments d'appui (5) regroupant des éléments d'appui avant (14) et des éléments d'appui arrière (16) lesquels roulent sur le sol en pivotant autour d'un axe (15, 17) respectif, lesdits éléments d'appui (5) étant susceptibles de passer d'une position de travail à une position de transport et d'une position de travail à une position de demi-tour, et inversement, au moyen d'au moins un actionneur (18, 19), ***caractérisé en ce que*** lesdits axes (15, 17) de deux éléments d'appui (5) voisins et décalés sont reliés par un dispositif de liaison (20) et que le plan passant par lesdits deux axes (15, 17) s'étend sensiblement parallèlement au sol dans la position de travail et dans la position de demi-tour et que ledit plan présente une inclinaison par rapport au sol lors du transport.

2. Semoir selon la revendication 1, ***caractérisé en ce que*** ledit dispositif de liaison (20) est relié audit châssis (2) via une première articulation (21) d'axe sensiblement horizontal et perpendiculaire à la direction d'avance (A).

3. Semoir selon la revendication 2, ***caractérisé en ce que*** chaque élément d'appui (5) est lié audit châssis (2) au moyen d'une fourche (22, 24) articulée, ledit élément avant (14) avec sa fourche avant (22) est lié audit châssis (2) via ladite première articulation (21) et ledit élément arrière (16) avec sa fourche arrière (24) est lié audit châssis (2) via une deuxième articulation (23).

4. Semoir selon la revendication 3, ***caractérisé en ce que*** ledit dispositif de liaison avec lesdits axes (15, 17) forme avec lesdites articulations (21, 23) un quadrilatère déformable tel qu'un parallélogramme.

5. Semoir selon la revendication 3 ou 4, ***caractérisé en ce que*** ladite deuxième articulation (23) est liée à ladite première articulation (21) au moyen d'une bielle supérieure (25).

6. Semoir selon l'une quelconque des revendications 1 à 5, ***caractérisé en ce qu'**un* premier actionneur (18) articulé entre ladite bielle supérieure (25) et ladite fourche arrière (24) permet de passer de la position de travail à la position de demi-tour et inversement.

7. Semoir selon l'une quelconque des revendications 1 à 5, ***caractérisé en ce qu'**un* deuxième actionneur (19) articulé entre ledit châssis (2) et ladite bielle supérieure (25) permet de passer de la position de travail à la position de transport et inversement.

8. Semoir selon la revendication 7, ***caractérisé en ce qu'**au* transport, ladite deuxième articulation (23) s'étend en dessous de ladite première articulation (21) et que ledit axe arrière (17) s'étend en dessous dudit axe avant (15).

9. Semoir selon l'une quelconque des revendications 1 à 8, ***caractérisé en ce qu'**il* comporte des enfouisseurs (33) montés sur une traverse (34), laquelle est reliée auxdites fourches avant (22).

10. Semoir selon la revendication 1 ou 2, ***caractérisé en ce que*** ledit dispositif de liaison desdits axes (15, 17) est un balancier.

## Patentansprüche

1. Sämaschine (1) mit einem Rahmen (2), der schräg zur Fahrtrichtung (A) angeordnete Arbeitselemente (3), Säelemente (4) und Abstützungselemente (5) trägt, wobei die Abstützungselemente (5) sich über die gesamte Arbeitsbreite erstrecken und bezüglich der Fahrtrichtung (A) nebeneinanderliegen und zueinander versetzt sind, wobei die Abstützungselemente (5) vordere Abstützungselemente (14) und hintere Abstützungselemente (16) umfassen, die über den Boden rollen indem sie um eine jeweilige Achse (15, 17) schwenken, wobei die Abstützungselemente (5) mittels mindestens eines Betätigungselementes (18, 19) von einer Arbeitsstellung in eine Transportstellung und von einer Arbeitsstellung in eine Umkehrstellung, und umgekehrt, übergehen können, ***dadurch gekennzeichnet,* dass** die Achsen (15, 17) von zwei nebeneinanderliegenden und zueinander versetzten Abstützungselementen (5) mittels einer Verbindungsvorrichtung (20) verbunden sind und, dass die Ebene, die die zwei Achsen (15, 17) durchquert sich in der Arbeitsstellung und in der Umkehrstellung im wesentlichen parallel zum Boden erstreckt und, dass die Ebene bezüglich zum Boden während des Transportes geneigt ist.

2. Sämaschine nach Anspruch 1, ***dadurch gekennzeichnet,* dass** die Verbindungsvorrichtung (20) mittels eines ersten Gelenks (21) mit einer im wesentlichen horizontalen und zur Fahrtrichtung (A) senkrechten Achse mit dem Rahmen (2) verbunden ist.

3. Sämaschine nach Anspruch 2, ***dadurch gekennzeichnet,* dass** jedes Abstützungselement (5) mittels einer gelenkigen Gabel (22, 24) mit dem Rahmen (2) verbunden ist, das vordere Element (14) mit seiner vorderen Gabel (22) ist mittels des ersten Gelenks (21) mit dem Rahmen (2) verbunden und das hintere Element (16) mit seiner hinteren Gabel (24) ist mittels eines zweiten Gelenks (23) mit dem Rahmen (2) verbunden.

4. Sämaschine nach Anspruch 3, ***dadurch gekennzeichnet*, dass** die Verbindungsvorrichtung mit den Achsen (15, 17) mit den Gelenken (21, 23) ein verformbares Viereck, wie zum Beispiel ein Parallelogramm, bildet.

5. Sämaschine nach Anspruch 3 oder 4, ***dadurch gekennzeichnet*, dass** das zweite Gelenk (23) mittels eines oberen Lenkers (25) mit dem ersten Gelenk (21) verbunden ist.

6. Sämaschine nach irgend einem der Ansprüche 1 bis 5, ***dadurch gekennzeichnet*, dass** ein erstes zwischen dem oberen Lenker (25) und der hinteren Gabel (24) angelenktes Betätigungselement (18) gestattet von der Arbeitsstellung in die Umkehrstellung zu überzugehen, und umgekehrt.

7. Sämaschine nach irgend einem der Ansprüche 1 bis 5, ***dadurch gekennzeichnet*, dass** ein zweites zwischen dem Rahmen (2) und dem oberen Lenker (25) angelenktes Betätigungselement (19) gestattet von der Arbeitsstellung in die Transportstellung überzugehen, und umgekehrt.

8. Sämaschine nach Anspruch 7, ***dadurch gekennzeichnet,* dass** sich beim Transport das zweite Gelenk (23) unter dem ersten Gelenk (21) erstreckt und, dass sich die hintere Achse (17) unter der vorderen Achse (15) erstreckt.

9. Sämaschine nach irgend einem der Ansprüche 1 bis 8, ***dadurch gekennzeichnet*, dass** sie an einem Querbalken (34) angebrachte Einleger (33) aufweist, der mit den vorderen Gabeln (22) verbunden ist.

10. Sämaschine nach Anspruch 1 oder 2, ***dadurch gekennzeichnet,* dass** die Verbindungsvorrichtung der Achsen (15, 17) eine Schwinge ist.

## Claims

1. Seeder (1) comprising a chassis (2) carrying work elements (3), seeder elements (4) and support elements (5) arranged transversely to the direction of advance (A), the said support elements (5) extending over the entire working width and being placed side by side and offset with one another with regard to the direction of advance (A), the said support elements (5) putting together front support elements (14) and rear support elements (16) which roll over the ground while pivoting around a respective axis (15, 17), the said support elements (5) being able to pass from a work position into a transport position and from a work position to a turn back position, and vice versa, by means of at least one actuator (18, 19), ***characterized in* that** the said axes (15, 17) of two neighbouring and offset support elements (5) are connected by a connecting device (20) and that the plane passing through the two axes (15, 17) extends substantially parallel to the ground in the work position and in the turn back position and that the said plane is inclined with respect to the ground during transport.

2. Seeder according to Claim 1, ***characterized in* that** the said connecting device (20) is connected to the said chassis (2) by means of a first articulation (21) with an axis substantially parallel and perpendicular to the direction of advance (A).

3. Seeder according to Claim 2, ***characterized in* that** each support element (5) is connected to the said chassis (2) by means of an articulated fork (22, 24), the said front element (14) with its front fork (22) is connected to the said chassis (2) by means of the said first articulation (21) and the said rear element (16) with its rear fork (24) is connected to the said chassis (2) by means of a second articulation (23).

4. Seeder according to Claim 3, ***characterized in* that** the said connecting device with the said axes (15, 17) forms with the said articulations (21, 23) a deformable quadrilateral such as a parallelogram.

5. Seeder according to Claim 3 or 4, ***characterized in* that** the second articulation (23) is connected to the first articulation (21) by means of an upper connecting-rod (25).

6. Seeder according to any one of Claims 1 to 5, ***characterized in* that** a first actuator (18) articulated between the said upper connecting-rod (25) and the said rear fork (24) makes it possible to pass from the work position into the turn back position, and vice versa.

7. Seeder according to any one of Claims 1 to 5, ***characterized in* that** a second actuator (19) articulated between the said chassis (2) and the said upper connecting-rod (25) makes it possible to pass from the work position into the transport position, and vice versa.

8. Seeder according to Claim 7, ***characterized in* that** during transport, the said second articulation (23) extends under the said first articulation (21) and that the said rear axis (17) extends under the said front axis (15).

9. Seeder according to any one of Claims 1 to 8, ***characterized in* that** it comprises coulters (33) mounted on a cross-beam (34), which is connected to the said front forks (22).

10. Seeder according to Claim 1 or 2, ***characterized in* that** the said connecting device of the said axes (15, 17) is a rock-lever.
